# EUROPEAN PATENT APPLICATION

(11) **EP 3 240 136 A1**
(43) Date of publication of application: **01.11.2017**
(21) Application number: 16182711.8
(22) Date of filing: 04.08.2016
(51) Int. Cl.: H02J 7/00, G06F 1/26, H02J 50/00

(54) **WIRELESS CHARGING DEVICE AND NOTEBOOK COMPUTER**

(30) Priority: 25.04.2016 CN 201610262132
(71) Applicant: Koneland Technology Co., Limited, Mongkok, KLN (HK)
(72) Inventor: XU, Shaoyan, Hong Kong (HK)
(74) Representative: Sun, Yiming

(57) **Abstract**

Disclosed are a wireless charging device and a notebook computer including the wireless charging device. The wireless charging device includes a device body, wherein further includes a charging board rotatablely connected with the device body; the charging board is provided with a charging-discharging coil; the device body is provided with a hollow for accepting the charging board; the hollow has a touch switch disposed therein for switching working circuit of the charging-discharging coil; the device body has a battery disposed therein and a charging circuit and a discharging circuit, both of which are connected with the battery; when the charging board is located inside the hollow, the charging-discharging coil is connected with the charging circuit so as to enter a charging mode; and when the charging board is located outside the hollow, the charging-discharging coil is connected with the discharging circuit so as to enter a discharging mode.

## Description

### FIELD OF THE INVENTION

The present invention relates to wireless charging devices and, in particular, it concerns a portable wireless charging device.

### BACKGROUND OF THE INVENTION

More and more portable electronic devices, all of which need power sources, are used by people, thus how to charge the electronic device becomes a difficult issue.

In the prior art, some wireless charging solutions have been widely used. However, all of the wireless charging devices of the prior art have too simple structure so that its function is not good enough for the portable electronic devices.

In view the above, it is necessary to develop a new wireless charging device, which is suitable to be applied to portable electronic devices.

### SUMMARY OF THE INVENTION

An object of the present invention is to provide a wireless charging device and a notebook computer thereof, so as to overcome the defects of the prior art.

According the present invention, there are provided the technical solutions as follows:
A wireless charging device, including a device body, wherein further includes a charging board rotatablely connected with the device body; the charging board is provided with a charging-discharging coil; the device body is provided with a hollow for accepting the charging board; the hollow has a touch switch disposed therein for switching working circuit of the charging-discharging coil; the device body has a battery disposed therein and a charging circuit and a discharging circuit, both of which are connected with the battery; when the charging board is located inside the hollow, the charging-discharging coil is connected with the charging circuit so as to enter a charging mode; and when the charging board is located outside the hollow, the charging-discharging coil is connected with the discharging circuit so as to enter a discharging mode.

Preferably, the hollow has a locking element provided at a side thereof for locking the charging board, and the charging board has a locking hole formed thereon for corresponding to the locking element; the locking element includes a locking pin for sliding fit with the device body and a spring provided on inner end of the locking pin and a shifting part connected with outer side of the locking pin and extending to outer side of the device body; and the device body is further provided with a sliding cavity for accepting the locking pin and a sliding groove and a recess for the shifting part to slide.

Preferably, it further includes a knockout pin disposed near the bottom of the hollow for sliding fit with the device body and the charging board is provided with a inclined surface for corresponding to the knockout pin; and further includes a driving lever located between the knockout pin and the locking pin, the driving lever being rotatablely connected with the device body, and having an upper end disposed inside a lower drive groove formed on the knockout pin and a lower end disposed inside an upper drive groove formed on the knockout pin.

Preferably, when leaving the locking hole, the locking pin transmits driving force to the driving lever via the upper drive groove, the driving lever then pushes the knockout pin to apply force to the inclined surface so that the charging board is pushed out of the hollow; and there is a gap provided between the upper drive groove and the lower end of the driving lever, the gap being equal to or larger than a needed displacement when the locking pin leaving the locking hole.

Preferably, the device body is a tablet computer.

A notebook computer, including a computer body, wherein further includes a charging board rotatablely connected with the computer body; the charging board is provided with a charging-discharging coil; a bottom of the computer body is provided with a hollow for accepting the charging board; the hollow has a touch switch disposed therein for switching working circuit of the charging-discharging coil; the computer body has a battery disposed therein and a charging circuit and a discharging circuit, both of which are connected with the battery; when the charging board is located inside the hollow, the charging-discharging coil is connected with the charging circuit so as to enter a charging mode; and when the charging board is located outside the hollow, the charging-discharging coil is connected with the discharging circuit so as to enter a discharging mode.

Preferably, the hollow has a locking element provided at a side thereof for locking the charging board, and the charging board has a locking hole formed thereon for corresponding to the locking element; the locking element includes a locking pin for sliding fit with the computer body and a spring provided on inner end of the locking pin and a shifting part connected with outer side of the locking pin and extending to outer side of the computer body; and the computer body is further provided with a sliding cavity for accepting the locking pin and a sliding groove and a recess for the shifting part to slide.

Preferably, it further includes a knockout pin disposed near the bottom of the hollow for sliding fit with the computer body and the charging board is provided with a inclined surface for corresponding to the knockout pin; and further includes a driving lever located between the knockout pin and the locking pin, the driving lever being rotatablely connected with the computer body, and having an upper end disposed inside a lower drive groove formed on the knockout pin and a lower end disposed inside an upper drive groove formed on the knockout pin.

Preferably, when leaving the locking hole, the locking pin transmits driving force to the driving lever via the upper drive groove, the driving lever then pushes the knockout pin to apply force to the inclined surface so that the charging board is pushed out of the hollow.

Compared with the prior art, the present invention has some beneficial effects as follows: The present invention uses a charging board structure, which is rotatablely connected with the device body, to provide two working states, thus it has multiple functions including charging (charging for itself) and discharging (charging for the external devices). When it is charging for itself, the charging board is accommodated in the device body and the device body can be used while charging. When the charging board is opened, the charging board can run in parallel with the device body so that the mobile device such as mobile phone can be placed on the charging board for charging. Based on these structure, it is very easy and convenient to use. The structure of the present invention can be applied to mobile electronic devices, such as tablet computer, notebook computer, PDA and so on.

The present invention will become more clearly by means of the following description combining the accompanying drawings, which are used to illustrate embodiments of the present invention.

### BRIEF DESCRIPTION OF THE DRAWINGS

FIG. 1 is a structure diagram of a notebook computer with wireless charging device according to an embodiment of the present invention (illustrating the charging board being closed and inside the cavity);
FIG. 2 is an enlarged view of A part shown in FIG. 1;
FIG. 3 is a structure diagram showing the charging board being opened (out of the cavity) according to the embodiment shown in FIG. 1; and
FIG. 4 is a block diagram illustrating a circuit configuration from the charging board to the battery.

### Reference numbers in the figures:

Computer body 10; sliding cavity 101
sliding groove 102; recess 103
hollow 11; touch switch 12
charging board 20; charging-discharging coil 21
locking hole 25; inclined surface 26
battery 30; charging circuit 41
discharging circuit 42; locking element 50
locking pin 51; upper drive groove 519
spring 52; shifting part 53
knockout pin 60; lower drive groove 69
driving lever 70; notebook computer S
charged object B; power supply C.

### DETAILED DESCRIPTION OF ILLUSTRATED EMBODIMENTS

The technical solutions of embodiments will be clearly and completely described as follows by combining the figures of the embodiments of the present invention. Obviously, the embodiments described as follows are merely parts of embodiments of the present invention, but not the all.

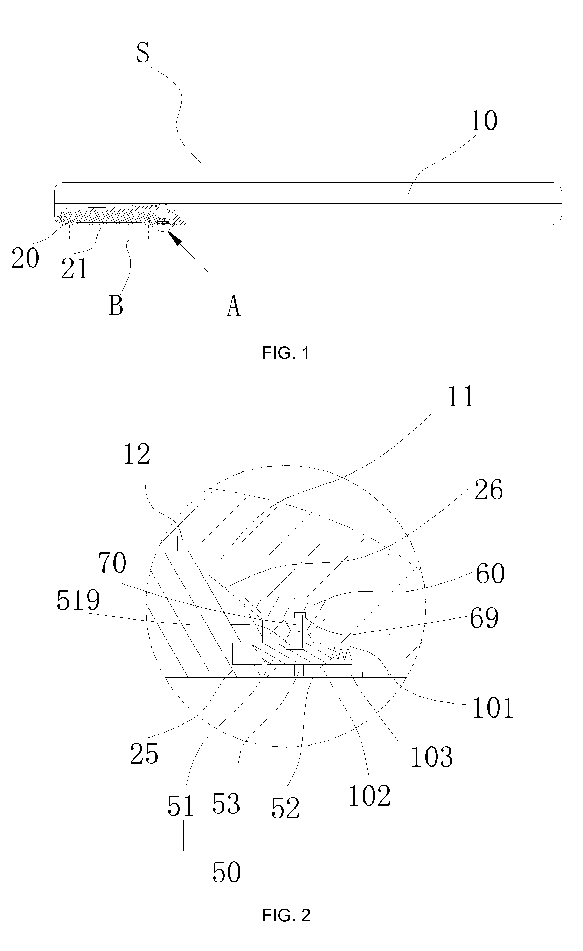

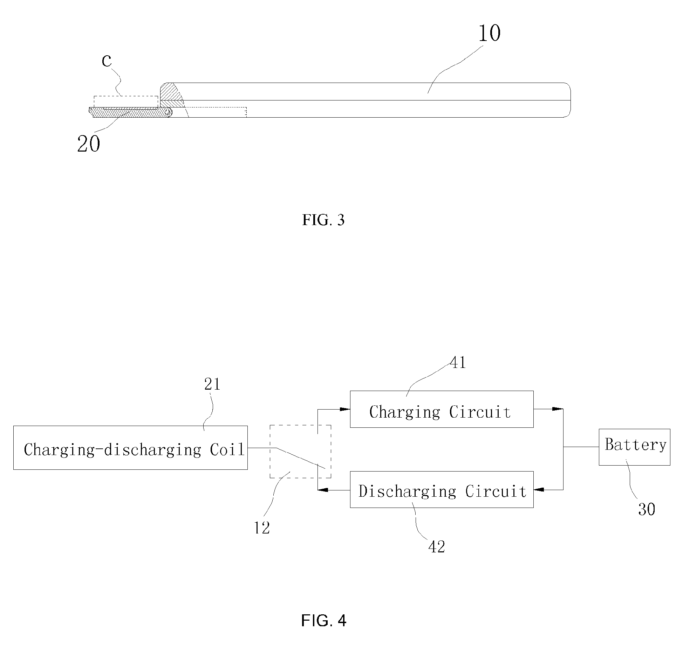

As shown in FIG. 1 to FIG.4, As shown in FIG. 1 to FIG.4, the notebook computer S of the present invention includes a computer body 10, and further includes a charging board 20 rotatablely connected with the bottom of the computer body 10; the charging board 20 is provided with a charging-discharging coil 21; a bottom of the computer body 10 is provided with a hollow 11 for accepting the charging board 20; the hollow 11 has a touch switch 12 disposed therein for switching working circuit of the charging-discharging coil 21; the computer body 10 has a battery 30 disposed therein and a charging circuit 41 and a discharging circuit 42, both of which are connected with the battery 30; when the charging board 20 is located inside the hollow 11, the charging-discharging coil 21 is connected with the charging circuit 41 so as to enter a charging mode; and when the charging board 20 is located outside the hollow 11, the charging-discharging coil 21 is connected with the discharging circuit 42 so as to enter a discharging mode.

In this embodiment, the hollow 11 has a locking element 50 provided at a side thereof for locking the charging board 20, and the charging board 20 has a locking hole 25 formed thereon for corresponding to the locking element 50; the locking element 50 includes a locking pin 51 for sliding fit with the computer body 10 and a spring 52 provided on inner end of the locking pin 51 and a shifting part 53 connected with outer side of the locking pin 51 and extending to outer side of the computer body 10; and the computer body 10 is further provided with a sliding cavity 101 for accepting the locking pin 51 and a sliding groove 102 and a recess 103 for the shifting part 53 to slide.

The notebook computer S further includes a knockout pin 60 disposed near the bottom of the hollow 11 for sliding fit with the computer body 10 and the charging board 20 is provided with a inclined surface 26 for corresponding to the knockout pin 60; and further includes a driving lever 70 located between the knockout pin 60 and the locking pin 51, the driving lever 70 being rotatablely connected with the computer body 10, and having an upper end disposed inside a lower drive groove 69 formed on the knockout pin 60 and a lower end disposed inside an upper drive groove 519 formed on the knockout pin 60.

After leaving the locking hole 25, the locking pin 51 transmits driving force to the driving lever 70 via the upper drive groove 519, the driving lever 70 then pushes the knockout pin 60 to apply force to the inclined surface 26 so that the charging board 20 is pushed out of the hollow 11; and there is a gap provided between the upper drive groove 519 and the lower end of the driving lever 70, the gap being equal to or larger than a needed displacement when the locking pin 51 leaving the locking hole 25.

In other embodiment, the device body of the wireless charging device of the present invention could be a tablet computer, that is, a tablet computer product or PDA product.

In other embodiment, in order to reduce the temperature when wireless charging, the charging board 20 has a slot type heat spreader (nonmagnetic material) provided thereon and opposite to the charging-discharging coil 21, the hollow 11 has a heat-conducting lattice cell provided at the bottom thereof for fitting with the slot type heat spreader, the heat-conducting lattice cell has a radiator fan provided at inner side thereof. Based on such a structure, when the charging board 20 is opened, the slot type heat spreader is communicated with the outside world to achieve heat emission, and when the charging board 20 is closed, the heat emission is achieved by means of the radiator fan. The cross section of the slot type heat spreader is an isosceles-trapezoid structure so that it is easy to open or close the charging board 20.

in conclusion, the present invention uses a charging board structure, which is rotatablely connected with the device body, to provide two working states, thus it has multiple functions including charging (charging for itself) and discharging (charging for the external devices). When it is charging for itself, the charging board is accommodated in the device body and the device body can be used while charging. When the charging board is opened, the charging board can run in parallel with the device body so that the mobile device such as mobile phone can be placed on the charging board for charging. Based on these structure, it is very easy and convenient to use. The structure of the present invention can be applied to mobile electronic devices, such as tablet computer, notebook computer, PDA and so on.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the invention.

## Claims

1. A wireless charging device, comprising a device body, wherein further comprises a charging board rotatablely connected with the device body; the charging board is provided with a charging-discharging coil; the device body is provided with a hollow for accepting the charging board; the hollow has a touch switch disposed therein for switching working circuit of the charging-discharging coil; the device body has a battery disposed therein and a charging circuit and a discharging circuit, both of which are connected with the battery; when the charging board is located inside the hollow, the charging-discharging coil is connected with the charging circuit so as to enter a charging mode; and when the charging board is located outside the hollow, the charging-discharging coil is connected with the discharging circuit so as to enter a discharging mode.

2. The wireless charging device according to claim 1, wherein the hollow has a locking element provided at a side thereof for locking the charging board, and the charging board has a locking hole formed thereon for corresponding to the locking element; the locking element comprises a locking pin for sliding fit with the device body and a spring provided on inner end of the locking pin and a shifting part connected with outer side of the locking pin and extending to outer side of the device body; and the device body is further provided with a sliding cavity for accepting the locking pin and a sliding groove and a recess for the shifting part to slide.

3. The wireless charging device according to claim 2, wherein further comprises a knockout pin disposed near the bottom of the hollow for sliding fit with the device body and the charging board is provided with a inclined surface for corresponding to the knockout pin; and further comprises a driving lever located between the knockout pin and the locking pin, the driving lever being rotatablely connected with the device body, and having an upper end disposed inside a lower drive groove formed on the knockout pin and a lower end disposed inside an upper drive groove formed on the knockout pin.

4. The wireless charging device according to claim 3, wherein when leaving the locking hole, the locking pin transmits driving force to the driving lever via the upper drive groove, the driving lever then pushes the knockout pin to apply force to the inclined surface so that the charging board is pushed out of the hollow; and there is a gap provided between the upper drive groove and the lower end of the driving lever, the gap being equal to or larger than a needed displacement when the locking pin leaving the locking hole.

5. The wireless charging device according to anyone of claims 1-4, wherein the device body is a tablet computer.

6. A notebook computer, comprising a computer body, wherein further comprises a charging board rotatablely connected with the computer body; the charging board is provided with a charging-discharging coil; a bottom of the computer body is provided with a hollow for accepting the charging board; the hollow has a touch switch disposed therein for switching working circuit of the charging-discharging coil; the computer body has a battery disposed therein and a charging circuit and a discharging circuit, both of which are connected with the battery; when the charging board is located inside the hollow, the charging-discharging coil is connected with the charging circuit so as to enter a charging mode; and when the charging board is located outside the hollow, the charging-discharging coil is connected with the discharging circuit so as to enter a discharging mode.

7. The notebook computer according to claim 6, wherein the hollow has a locking element provided at a side thereof for locking the charging board, and the charging board has a locking hole formed thereon for corresponding to the locking element; the locking element comprises a locking pin for sliding fit with the computer body and a spring provided on inner end of the locking pin and a shifting part connected with outer side of the locking pin and extending to outer side of the computer body; and the computer body is further provided with a sliding cavity for accepting the locking pin and a sliding groove and a recess for the shifting part to slide.

8. The notebook computer according to claim 7, wherein further comprises a knockout pin disposed near the bottom of the hollow for sliding fit with the computer body and the charging board is provided with a inclined surface for corresponding to the knockout pin; and further comprises a driving lever located between the knockout pin and the locking pin, the driving lever being rotatablely connected with the computer body, and having an upper end disposed inside a lower drive groove formed on the knockout pin and a lower end disposed inside an upper drive groove formed on the knockout pin.

9. The notebook computer according to claim 8, wherein when leaving the locking hole, the locking pin transmits driving force to the driving lever via the upper drive groove, the driving lever then pushes the knockout pin to apply force to the inclined surface so that the charging board is pushed out of the hollow; and there is a gap provided between the upper drive groove and the lower end of the driving lever, the gap being equal to or larger than a needed displacement when the locking pin leaving the locking hole.

10. The notebook computer according to claim 6, wherein the charging board has a slot type heat spreader provided thereon and opposite to the charging-discharging coil, the hollow has a heat-conducting lattice cell provided at the bottom thereof for fitting with the slot type heat spreader, the heat-conducting lattice cell has a radiator fan provided at inner side thereof, and when the charging board is closed, the slot type heat spreader is communicated with the outside world, the cross section of the slot type heat spreader is an isosceles-trapezoid structure.
